# EUROPÄISCHE PATENTSCHRIFT

(11) **EP 0 803 410 B1**
(45) Veröffentlichungstag und Bekanntmachung des Hinweises auf die Patenterteilung: **10.12.2003**
(21) Anmeldenummer: 97106624.6
(22) Anmeldetag: 22.04.1997
(51) Int. Cl.: B60R 21/20

(54) **Airbag-Abdeckkappe**
Airbag cover
Couvercle pour coussin gonflable

(30) Priorität: 27.04.1996 DE 19616942
(43) Veröffentlichungstag der Anmeldung: 29.10.1997
(73) Patentinhaber: TRW Automotive Safety Systems GmbH, 63743 Aschaffenburg (DE)
(72) Erfinder: Kreuzer, Martin, 63839 Kleinwallstadt (DE); Hufgard, Albrecht, 97837 Erlenbach (DE); Bohn, Stefan, 63773 Goldbach (DE)
(74) Vertreter: Degwert, Hartmut, Dipl.-Phys.

(56) Entgegenhaltungen:
- EP-A- 0 791 508
- WO-A-96/30232
- US-A- 4 120 516
- US-A- 5 316 822

## Beschreibung

Die Erfindung betrifft eine Abdeckkappe für einen in der Instrumententafel eines Kraftfahrzeuges untergebrachten Airbag gemäß dem Oberbegriff von Anspruch 1.

Derartige Abdeckkappen werden aus funktionellen und ästhetischen Gründen hinsichtlich Material- und Oberflächengestaltung an ihre Umgebung angepaßt, d.h. sie werden zu einem möglichst unauffälligen Teil der fahrgastraumseitigen Wandung der Instrumententafel. Letztere werden vielfach mit einer strukturierten, lederartigen Oberfläche ausgeführt, die den Abschluß eines harten Formteils aus gespritztem Kunststoff bildet, selbst aber verhältnismäßig weich ist. Dementsprechend weisen die zugehörigen Abdeckkappen einen harten, formstabilen Kern und eine weiche Oberfläche auf.

Instrumententafeln dieser Art gehören selbst bei vielen Kleinwagen zur Standardausrüstung, obwohl ihre Herstellung sehr aufwendig ist. Im Zuge radikaler Senkung der Herstellungskosten für Kraftfahrzeuge geht man daher bei einigen besonders preisgünstigen Fahrzeugtypen dazu über, die Instrumententafel einheitlich aus einem vergleichsweise harten Kunststoff herzustellen, was fertigungstechnisch wesentlich einfacher, jedoch zwangsläufig mit einer harten Oberfläche verbunden ist, zu der die meisten der bisher verwendeten Abdeckkappen nicht passen. Auch für diese Anwendungsfälle soll aber die Abdeckkappe an die Instrumententafel angepaßt werden.

Dabei ergibt sich das Problem, daß harte Kunststoffe zum Splittern neigen, wenn der Airbag schlagartig aufgeblasen und die Abdeckkappe aufgeschwenkt wird. Da das Ablösen von Bruchstücken im Hinblick auf die damit verbundene Verletzungsgefahr unbedingt vermieden werden muß, sind die für harte Instrumententafeln vorgesehenen Kunststoffe zur Herstellung von Abdeckkappen nicht geeignet. Damit wird die vorgegebene Anpassung der Abdeckkappe an die Instrumententafel ganz erheblich erschwert.

Aus der US-A-4,925,209 ist eine gattungsgemäße Abdeckkappe für einen in der Instrumententafel eines Kraftfahrzeugs untergebrachten Airbag bekannt. Die aus zwei Komponenten bestehende Abdeckkappe weist an ihrer Unterseite ein Blech auf, an dem die Abdeckkappe an einem Airbaggehäuse befestigt ist. An der gegenüberliegenden Seite ist die Abdeckkappe an dem Airbaggehäuse lösbar verschraubt, so daß sich beim Entfalten des Airbags die Abdeckkappe von dem Airbaggehäuse lösen und sich öffnen kann.

Es besteht daher die Aufgabe, eine Abdeckkappe der eingangs genannten Art vorzuschlagen, die einerseits so gestaltet ist, daß sie sich von der sie umgebenden Instrumententafel nicht unterscheidet, andererseits aber alle funktionellen Aufgaben erfüllt, d.h. beim normalen Fahrzeuggebrauch zuberlässig die Austritlsöffnung für den Airbag verschließt und beim Aufblasen leicht zu öffnen ist.

Diese Aufgabe wird erfindungsgemäß durch eine gattungsgemäße Abdeckkappe gelöst, die dadurch gekennzeichnet ist, daß in der Unterschicht mindestens eine Biegelinie und dazu korrespondierend in der Deckschicht eine Sollbruchlinie vorgesehen ist.

Die erfindungsgemäße Abdeckkappe ist insbesondere dadurch gekennzeichnet, daß die Deckschicht aus einem Kunststoff besteht, der optisch, haptisch und hinsichtlich seines akustischen Verhaltens auf das Material der Oberfläche der Instrumententafel abgestimmt ist.

Abwandlungen und Ausgestaltungen des Erfindungsgedanken sind in den

Unteransprüchen 3 bis 16 beschrieben.

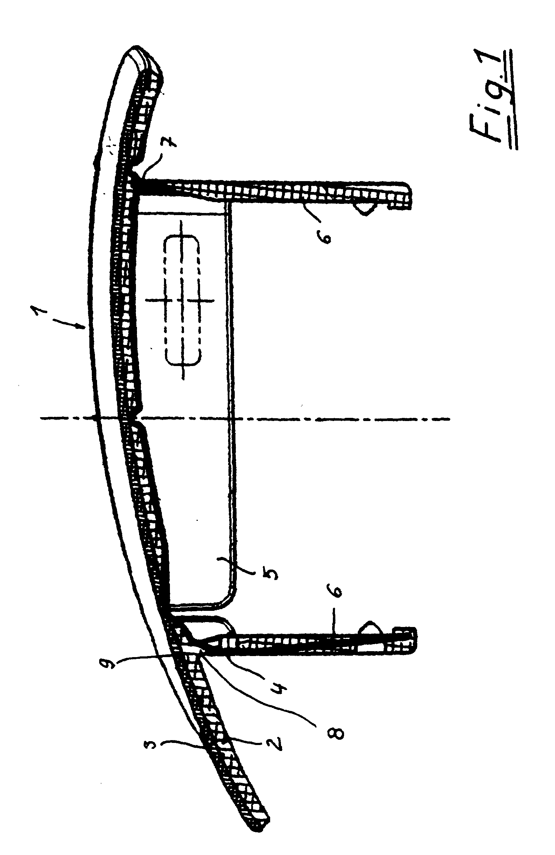

Weitere Einzelheiten werden anhand des in Fig. 1 dargestellten Ausführungsbeispiels näher erläutert.

Fig. 1 zeigt einen Querschnitt durch eine Abdeckkappe 1 gemäß der Erfindung, die senkrecht zur Darstellungsebene in Anpassung an die sie umgebende Instrumententafel eine leicht konkave, sattelförmige Form aufweist. Die Abdeckkappe 1 besteht aus einer Unterschicht 2 aus einem weichen, elastischen Kunststoff und einer Deckschicht 3 aus einem härteren Kunststoff. Beide Schichten 2, 3 sind erfindungsgemäß im wesentlichen ganzflächig haftend miteinander verbunden, wodurch bei einem Zersplittern der härteren Deckschicht 3 gewährleistet ist, daß alle Bruchstücke mit der Unterschicht 2 verbunden bleiben und nicht unkontrolliert in Richtung Fahrgastraum wegfliegen können, wenn der Airbag aktiviert wird.

Die Unterschicht 2 weist eine Armierung 4 auf, die aus einem dünnen Blech, einem Stoffgewebe, einem Drahtnetz oder dgl. bestehen kann und den Zweck hat, die Abdeckkappe 1 insgesamt mit der Instrumententafel verbunden zu halten, wenn sie in Folge des schlagartigen Aufblasens des Airbags nach oben geschwenkt wird. Diese Armierung 4 kann direkt an der Instrumententafel bzw. Fahrzeugkarosserie befestigt sein. Sie kann aber auch in einen Befestigungssteg 6 (links) hineinreichen, der einstückig an der Unterschicht 2 der Abdeckkappe 1 angeformt ist und eine Verbindung zwischen Abdeckkappe 1 und Airbag-Gehäuse bzw. Instrumententafel oder Fahrzeugkarosserie herstellt. In derartigen Fällen sind meist auch Rahmenteile 5 und ein weiterer, gegenüberliegender Befestigungssteg 6 (rechts) vorgesehen, der über eine Sollbruchstelle 7 ebenfalls einstückig mit der Unterschicht verbunden ist. Die Rahmenteile 5 dienen der Stabilisierung und räumlichen Festlegung der Abdeckkappe 1 mit Bezug auf die Einbau-Umgebung.

Im Übergangsbereich zwischen dem Befestigungssteg (links), in den auch die Armierung 4 eingebunden ist, und der Unterschicht 2 der Abdeckkappe 1, ist eine Biegelinie 8 vorgesehen, die durch Materialschwächung realisiert ist und mit einer ebenfalls durch Materialschwächung erzeugte Sollbruchlinie 9 der Deckschicht 3 zusammenwirkt, wenn die Abdeckkappe 1 beim Aktivieren des Airbags aufklappt.

Die erfindungsgemäße Abdeckkappe 1 ist ohne weiteres an alle aus verhältnismäßig hartem Material bestehenden und deswegen kostengünstig herstellbare Instrumententafeln anzupassen, weil durch die innige, ganzflächige Haftung mit der aus bruchsicherem Material bestehenden Unterschicht 2 verhindert wird, daß sie beim plötzlichen Aufklappen in unkontrollierbar herumfliegende Bruchstü cke zersplittert. Alle Teile der härteren Deckschicht 3 werden vielmehr von der weicheren Unterschicht 2 sicher festgehalten und können daher keinen Schaden anrichten.

Die Deckschicht weist bevorzugterweise eine shore A Härte größer 92 und die Unterschicht eine Shore A Härte bleiner 92 auf.

Die Deckschicht und die Unterschicht können beispielsweise über chemische oder mechanische Kopplungen miteinander verbunden sein. Die beiden Schichten werden bevorzugterweise mittels Zweikomponentenspritzgießtechnik hergestellt.

## Patentansprüche

1. Abdeckkappe für einen in der Instrumententafel eines Kraftfahrzeuges untergebrachten Airbag, wobei die Abdeckkappe (1) aus einer Unterschicht (2) aus einem weichen, elastischen Kunststoff und einer Deckschicht (3) aus einem härteren Kunststoff besteht und beide Schichten (2, 3) im wesentlichen ganzflächig haftend miteinander verbunden sind, **dadurch gekennzeichnet, daß** in der Unterschicht (2) mindestens eine Biegelinie (8) und dazu korrespondierend in der Deckschicht (3) eine Sollbruchlinie (9) vorgesehen ist.

2. Abdeckkappe nach Anspruch 1, **dadurch gekennzeichnet, daß** die Deckschicht (3) aus einem Kunststoff besteht, der optisch, haptisch und hinsichtlich seines akustischen Verhaltens auf das Material der Oberfläche der Instrumententafel abgestimmt ist.

3. Abdeckkappe nach Anspruch 1 oder 2, **dadurch gekennzeichnet, daß** die Unterschicht (2) eine Armierung (4) in Form eines Bleches, eines Stoffgewebes oder eines Drahtnetzes aufweist.

4. Abdeckkappe nach einem der Ansprüche 1 bis 3, **dadurch gekennzeichnet, daß** an der Unterschicht (2) Rahmenteile (5) und/oder Befestigungsstege (6) einstückig angeformt sind.

5. Abdeckkappe nach Anspruch 4, **dadurch gekennzeichnet, daß** im Übergangsbereich zwischen Unterschicht (2) und Rahmenteilen (5) bzw. Befestigungsstegen (6) mindestens eine Sollbruchstelle (7) vorgesehen ist.

6. Abdeckkappe nach einem der vorhergehenden Ansprüche, **dadurch gekennzeichnet, daß** sie beim Aufblasen des Airbags längs der Biegelinie (8) scharnierartig aufklappt.

7. Abdeckkappe nach Anspruch 6, **dadurch gekennzeichnet, daß** die in der Unterschicht (2) befindliche Armierung (4) als Scharnier wirkt.

8. Abdeckkappe nach Anspruch 7, **dadurch gekennzeichnet, daß** sie weitere scharnierartig wirkende Biege- bzw. Sollbruchlinien in der Unterschicht (2) und in der Deckschicht (3) aufweist.

9. Abdeckkappe nach einem der Ansprüche 1 bis 8, **dadurch gekennzeichnet, daß** die beiden Schichten (2, 3) aus thermoplastischem Kunststoff bestehen.

10. Abdeckkappe nach einem der Ansprüche 1 bis 9, **dadurch gekennzeichnet, daß** die Deckschicht (3) eine Shore A Härte größer 92 aufweist.

11. Abdeckkappe nach einem der Ansprüche 1 bis 10, **dadurch gekennzeichnet, daß** die Unterschicht (2) eine Shore A Härte kleiner 92 aufweist.

12. Abdeckkappe nach einem der Ansprüche 1 bis 11, **dadurch gekennzeichnet, daß** die Deckschicht (3) aus Polypropylen, Polyphenyloxid, Polycarbonat, Acrylnitrilbutadienstyrol, thermoplastischen Elastomeren, Polyamid und/oder deren Mischpolymerisaten besteht.

13. Abdeckkappe nach einem der Ansprüche 1 bis 12, **dadurch gekennzeichnet, daß** die Unterschicht (2) aus thermoplastischen Elastomeren besteht.

14. Abdeckkappe nach einem der Ansprüche 1 bis 13, **dadurch gekennzeichnet, daß** die Schichten (2, 3) über chemische Kopplungen miteinander verbunden sind.

15. Abdeckkappe nach einem der Ansprüche 1 bis 13, **dadurch gekennzeichnet, daß** die Schichten (2, 3) über mechanische Kopplungen miteinander verbunden sind.

16. Abdeckkappe nach einem der Ansprüche 1 bis 15, **dadurch gekennzeichnet, daß** die Schichten (2, 3) mittels Zweikomponentenspritzgießtechnik hergestellt worden sind.

## Claims

1. A lid for an airbag accommodated in the instrument panel of a motor vehicle, the lid (1) consisting of a lower layer (2) of a soft, elastic plastic material and a cover layer (3) of a harder plastic material and both layers (2, 3) being connected with each other adhering substantially totally surface to surface, **characterized in that** at least one bending line (8) is provided in the lower layer (2) and a corresponding predetermined breaking line (9) is provided in the cover layer (3).

2. The lid according to claim 1, **characterized in that** the cover layer (3) consists of a plastic material which matches the material of the surface of the instrument panel in appearance, feel, and acoustics.

3. The lid according to claim 1 or 2, **characterized in that** the lower layer (2) is provided with a reinforcement (4) in the form of a sheet metal plate, a textile fabric or a wire net.

4. The lid according to any of claims 1 to 3, **characterized in that** frame parts (5) and/or mounting webs (6) are formed integrally with the lower layer (2).

5. The lid according to claim 4, **characterized in that** at least one predetermined breaking point (7) is provided in the transition region between the lower layer (2) and the frame parts (5) or the mounting webs (6).

6. The lid according to any of the preceding claims, **characterized in that** upon inflation of the airbag, the lid swings open along the bending line (8) in the nature of a hinge.

7. The lid according to claim 6, **characterized in that** the reinforcement (4) located in the lower layer (2) acts as a hinge.

8. The lid according to claim 7, **characterized in that** it is provided with further bending and predetermined breaking lines in the lower layer (2) and in the cover layer (3), respectively, which act like hinges.

9. The lid according to any of claims 1 to 8, **characterized in that** the two layers (2, 3) consist of a thermoplastic material.

10. The lid according to any of claims 1 to 9, **characterized in that** the cover layer (3) has a Shore A hardness higher than 92.

11. The lid according to any of claims 1 to 10, **characterized in that** the lower layer (2) has a Shore A hardness lower than 92.

12. The lid according to any of claims 1 to 11, **characterized in that** the cover layer (3) is made of polypropylene, polyphenyl oxide, polycarbonate, acrylonitrile butadiene styrene, thermoplastic elastomers, polyamide and/or copolymers thereof.

13. The lid according to any of claims 1 to 12, **characterized in that** the lower layer (2) is made of thermoplastic elastomers.

14. The lid according to any of claims 1 to 13, **characterized in that** the layers (2, 3) are connected to each other by chemical couplings.

15. The lid according to any of claims 1 to 13, **characterized in that** the layers (2, 3) are connected to each other by mechanical couplings.

16. The lid according to any of claims 1 to 15, **characterized in that** the layers (2, 3) were produced by means of two-component injection moulding.

## Revendications

1. Couvercle pour un coussin à gaz logé dans le tableau de bord d'un véhicule, le couvercle (1) étant constitué par une couche inférieure (2) en une matière plastique souple élastique et par une couche de recouvrement (3) en une matière plastique plus dure, et les deux couches (2, 3) étant reliées l'une à l'autre par adhérence sensiblement sur toute la surface, **caractérisé en ce qu'**il est prévu au moins une ligne de pliage (8) dans la couche inférieure (2) et de manière correspondante, une ligne destinée à la rupture dans la couche de recouvrement (3).

2. Couvercle selon la revendication 1, **caractérisé en ce que** la couche de recouvrement (3) est en une matière plastique qui, du point de vue apparence, toucher et comportement acoustique, est adaptée au matériau de la surface du tableau de bord.

3. Couvercle selon la revendication 1 ou 2, **caractérisé en ce que** la couche inférieure (2) présente une armature (4) sous forme de tôle, de tissu ou de treillis en fil métallique.

4. Couvercle selon l'une des revendications 1 à 3, **caractérisé en ce que** des parties de cadre (5) et/ou des traverses de fixation (6) sont moulées d'un seul tenant sur la couche inférieure (2).

5. Couvercle selon la revendication 4, **caractérisé en ce qu'**il est prévu au moins un point destiné à la rupture (7) dans la région de transition entre la couche inférieure (2) et les parties de cadre (5) ou les traverses de fixation (6), respectivement.

6. Couvercle selon l'une des revendications précédentes, **caractérisé en ce qu'**au gonflage du coussin à gaz, il s'ouvre le long de la ligne de pliage (8) à la manière d'une charnière.

7. Couvercle selon la revendication 6, **caractérisé en ce que** l'armature (4) se trouvant dans la couche inférieure (2) agit à la façon d'une charnière.

8. Couvercle selon la revendication 7, **caractérisé en ce qu'**il comprend d'autres lignes de pliage et d'autres lignes destinées à la rupture, agissant à la façon de charnières, dans la couche inférieure (2) et dans la couche de recouvrement (3), respectivement.

9. Couvercle selon l'une des revendications 1 à 8, **caractérisé en ce que** les deux couches (2, 3) sont en matière thermoplastique.

10. Couvercle selon l'une des revendications 1 à 9, **caractérisé en ce que** la couche de recouvrement (3) présente une dureté Shore A supérieure à 92.

11. Couvercle selon l'une des revendications 1 à 10, **caractérisé en ce que** la couche de recouvrement (3) présente une dureté Shore A inférieure à 92.

12. Couvercle selon l'une des revendications 1 à 11, **caractérisé en ce que** la couche de recouvrement (3) est en polypropylène, en oxyde de polyphénylène, en polycarbonate, en acrylonitrile-styrène-butadiène, en élastomères thermoplastiques, en polyamide et/ou en leurs copolymères.

13. Couvercle selon l'une des revendications 1 à 12, **caractérisé en ce que** la couche inférieure (2) est en élastomères thermoplastiques.

14. Couvercle selon l'une des revendications 1 à 13, **caractérisé en ce que** les couches (2, 3) sont reliées l'une à l'autre par couplages chimiques.

15. Couvercle selon l'une des revendications 1 à 13, **caractérisé en ce que** les couches (2, 3) sont reliées l'une à l'autre par couplages mécaniques.

16. Couvercle selon l'une des revendications 1 à 15, **caractérisé en ce que** les couches (2, 3) ont été réalisées par la technique de moulage par injection à deux composants.
